# EUROPEAN PATENT SPECIFICATION

(11) **EP 3 717 286 B1**
(45) Date of publication and mention of the grant of the patent: **13.04.2022**
(21) Application number: 18839909.1
(22) Date of filing: 28.11.2018
(51) Int. Cl.: B60G 11/113, B60G 9/00, B60G 11/46

(54) **AXLE CLAMPING ARRANGEMENT**
ACHSENKLEMMANORDNUNG
DISPOSITIF DE SERRAGE D'UN ESSIEU

(30) Priority: 28.11.2017 NL 2019987
(43) Date of publication of application: 07.10.2020
(73) Proprietor: VDL Weweler B.V., 7325 WC Apeldoorn (NL)
(72) Inventor: SCHRIER, Tom, 7323 TE Apeldoorn (NL); BRUINJA, Marten Frank Ciarán, 7545 VV Enschede (NL)
(74) Representative: EP&C
(86) International application number: PCT/NL2018/050799
(87) International publication number: WO 2019/108062

(56) References cited:
- EP-A1- 1 334 848
- EP-A1- 2 130 688
- WO-A1-2012/078031
- NL-C2- 1 015 231
- US-A- 2 539 091
- US-A1- 2004 212 166

## Description

The invention relates to the field of (air) sprung wheel axle suspensions commonly applied on utility vehicles such as trucks, trailers or semi-trailers.

In particular the invention relates to an axle clamping arrangement according to the preamble of claim 1.

Wheel axle suspensions with axle clamping arrangements of this type are well known in the art. The trailing arm, the axle pad and the axle body are firmly clamped together by means of the tensioning means, whereby in engagement areas the frictional force should fix the axle body to the trailing arm. However, the frictional force alone is generally not sufficient to entirely keep the dynamically loaded trailing arm and the axle pad together, which may lead to shifting of the axle pad (and thus the axle body) with respect to the trailing arm. This shifting is undesirable because it leads to dislocation of the axle body with respect to the trailing arms, which may lead to extensive wear of tires, parts and even failure of parts. Therefore in such clamping arrangements there is often used an interlocking means to interlock, i.e. positive locking, the axle pad and the trailing arm in the longitudinal and transverse direction of the trailing arm. This interlocking means often is a pin like member attached to the axle pad and received in a recess in the trailing arm. Such an element may also be used to position the axle pad on the trailing arm.

For example DE 10 2012 103 961 A1 discloses an axle clamping arrangement comprising a tubular axle body, a trailing arm that crosses the axle body and an axle pad that is clamped between the axle body and the trailing arm. The assembly of trailing arm, axle pad and axle body is clamped together by U-bolts which extend around the axle body and which are tightened by nuts relative to a plate lying on the opposite side of the trailing arm. When the axle pad and the trailing arm are clamped together, the interface between them is defined by two engagement areas, one at the front end of the axle pad and one at the rear end of the axle pad, which engagement areas are indicated by "A" and "B" in Fig. 3 of this document. In the engagement areas A and B the clamping forces are transmitted between the trailing arm and the axle pad. The interfaces in the engagement areas A and B lie in the same plane (or at least a plane with the same normal direction) and only provide a non-positive locking, which in general is not sufficient to prevent shifting of the trailing arm and axle pad with respect to each other. Therefore, in the engagement areas A and B the axle pad is provided with two protrusions and the trailing arm is provided with two blind holes which receive the respective protrusions of the axle pad to interlock the axle pad with respect to the trailing arm in a positive connection. This interlocking on two locations prevents relative shifting and rotation of the axle pad and the trailing arm in the plane defined by the interface between the trailing arm and the axle pad.

Another example of such a clamping arrangement is disclosed in EP 1273464. In this example the axle pad is provided with one positioning protrusion, approximately in the middle between the legs of the U-bolts, which protrusion closely fits in a blind hole provided in the trailing arm.

Yet another example of such a clamping arrangement is disclosed in DE 10 2009 030 633 A1. In this example the axle pad and the trailing arm are both provided with a blind hole between the legs of the U-bolts, in which a dowel is inserted to provide a correct longitudinal positioning of the axle pad (and thus the axle) on the trailing arm. Additionally the axle pad in this known clamping arrangement has at the front end and at the rear end lateral upstanding formations extending upward along either lateral side of the trailing arm. These lateral upstanding formations interlock the trailing arm and the axle pad in a transverse direction of the trailing arm.

A disadvantage of the known axle clamping arrangement is that the interlocking means and/or the corresponding recesses (such as blind holes) have to fit accurately, which generally requires a well-defined machining operation to remove tolerances in the parts. However, such machining operations, especially on the dynamically loaded trailing arm have a negative effect on the strength of the part. Moreover, the machining of parts leads to additional handling and costs.

EP 1334848 A1 discloses a clamping arrangement wherein there is three point bearing between the axle pad and the trailing arm.

WO2012/078031 discloses a clamping arrangement with a three point bearing between the axle pad and the trailing arm. Also a clamping arrangement with a two point bearing bracket is shown, which may be considered the closest prior art for the invention. However, with this known two point bearing bracket the axle body also directly bears against the trailing arm. The influence of fabrication tolerances is mitigated by these embodiments.

The invention has for an object to provide an axle clamping arrangement in which the parts do not have to be machined to provide the interlocking structure.

This object is achieved by an axle clamping arrangement according to claim 1.

In the clamping arrangement of the invention the tapering protrusion provides a supporting area in which the axle pad is clamped against the tapering surface of the complementary recess. Since the surface is tapering, the structure when clamped together is able to compensate for manufacturing tolerances in both the trailing arm and the axle pad. Consequently no machining of parts is necessary, which makes the manufacturing easier and more cost effective. Moreover the circumferential tapering surface provides a non-positive locking ("kraftschlüssig") in the rotational direction of the protrusion. In the longitudinal and transverse direction of the trailing arm the tapering shape of the recess and the protrusion provides a combination of a positive locking ("formschlüssig") and non-positive locking ("kraftschlüssig"). The first engagement area and the second engagement area provide a two point bearing between the axle pad and the clamping region of the trailing arm.

In a practical embodiment the tapering protrusion has a base which has a width or a diameter which is at least 30% of the width of the trailing arm at the location of the clamping arrangement, preferably 50% or more. In this way it is assured that the support surface is large enough to distribute the clamping forces to be transmitted between the axle pad and the trailing arm at the first engagement area.

The tapering shape of the protrusion has a tapering circumferential surface which extends obliquely with respect to the base of the tapering protrusion. In a particular practical embodiment the tapering circumferential surface extends under an angle α with respect to the normal of the base, wherein the angle α between the normal of said base and the peripheral surface 10° < α < 60°.

In a preferred embodiment the protrusion is formed on the axle pad and the recess is formed, preferably as a depression, into the trailing arm. The axle pad is often a cast or forged part, on which the protrusion can be formed easily. Trailing arms, in particular flexible trailing arms are often made from spring steel by a rolling process. After the arm is rolled it is easier to provide a depression than a protrusion in such a rolled arm. However flexible trailing arms can also be made by forging in which it would be possible to provide a tapering protrusion on the trailing arm.

The protrusion may have different shapes. In a particular embodiment it has for example a round and tapering shape, preferably a frusto-conical shape, and the recess has a complementary round and tapering shape. The tapering surface of the frusto-conical shape may be purely conical, but it may also have a negative curvature or a positive curvature. In the latter case the protrusion may even be a spherical segment.

Instead of round and tapering shape, the protrusion may also have a polygonal and tapering shape, and the recess in that case has a complementary polygonal and tapering shape. In a practical embodiment the polygonal and tapering shape is a truncated square pyramid shape. Also in this embodiment the sides of the truncated pyramid may be positively curved, negatively curved or plane.

In a preferred embodiment the clamping arrangement comprises a second engagement area in which a generally flat support surface of the axle pad and a generally flat support surface of the trailing arm are clamped in engagement with each other, wherein, seen in the longitudinal direction of the trailing arm, the second engagement area is spaced apart from the first engagement area. More preferably the second engagement area is located in front of the first engagement area.

In a practical embodiment the tensioning means comprise tensioning shanks, wherein at a front end region of the axle pad at least one front shank of said tensioning shanks and at a rear end region of the axle pad at least one rear shank of said tensioning shanks is located.

The first and second engagement regions are located near the front and rear shanks, such that the clamping forces are guided efficiently into the engagement surfaces.

In a preferred embodiment the first engagement area is located substantially at the rear end region of the axle pad (i.e. at or near the rear shanks), seen in the longitudinal direction of the trailing arm and the second engagement area is located substantially at the front end region of the axle pad (i.e. at or near the front shanks).

In a further embodiment the protrusion in the first engagement area has a centre axis which is, seen in the longitudinal direction of the trailing arm, at the same level as the centre axis of the at least one rear shank.

The tensioning means may have several practical embodiments. The most common tensioning means used are bolts and U-bolts which have threaded shanks and cooperate with an associated threaded nut.

In a possible embodiment the tensioning means may comprise multiple bolts each including one of said threaded shanks. In such an embodiment a clamping body may be applied on a side of the axle body opposite the axle pad and is engaged by the bolts. Such a clamping body is as such known and may alternatively also be used with U-bolts, wherein the U-bolts extend around the clamping body, or around hooking formations formed on the clamping body.

In another possible embodiment the tensioning means comprise one or more U-bolts each having two of said threaded shanks. In a further preferred embodiment the U-bolt extends around the axle body, such that the U-bolt has a front shank and a rear shank, which extend along a front side and a rear side of the axle body.

The protrusion in the first engagement area has a centre axis, and the flat support surface of the axle pad in the second engagement area has a normal. The centre axis of the protrusion and said normal may extend under an angle β with respect to each other, preferably in the range 0° ≤ β ≤ 90°. When the angle β = 0°, the mentioned centre axis and the mentioned normal extend parallel to each other. In wheel axle suspensions where the trailing arm is curved at the clamping region, for example where the trailing arm has at the rear end a mounting portion for an air spring which is on a lower level than the front end of the trailing arm, the axle pad is formed conform to the shape of the trailing arm as a curved or angled plate body. In that event the angle β > 0° and may be as large as 90°.

Notwithstanding the above there are embodiments possible wherein the angle β < 0°. In practise when the angle β remains small, but to a maximum of -45°.

In a possible embodiment the axle pad has two lateral lugs which extend from the axle pad upwardly along respective lateral sides of the trailing arm and which provide a lateral interlocking between the trailing arm and the axle pad. In an alternative embodiment the axle pad has at least one lug extending upwardly from the axle pad, and wherein the trailing arm has at least one corresponding recess in the axle facing side thereof, which at least one lug and recess provide a lateral interlocking between the trailing arm and the axle pad. The lug(s) provide(s) a transverse interlocking at a location remote from the tapering protrusion, such that especially when the tapering protrusion has a round shape, e.g. a truncated cone shape, the axle pad is blocked by the lugs to rotate around the centre axis of the protrusion.

The invention also relates to a (air) sprung wheel axle suspension including a clamping arrangement as described in the above.

It is noted that an axle pad as intended herein and mentioned in the appended claims is a part that is arranged between the axle body and the trailing arm. The tensioning means clamp the axle body in the axle seat formed in the axle pad. The axle pad is clamped against the trailing arm. The axle body is thus not clamped directly against the trailing arm.

The invention will be further elucidated in the following detailed description with reference to the drawing, in which:
Fig. 1 shows in a view in perspective a part of a wheel axle suspension with an embodiment of an axle clamping arrangement according to the invention,
Fig. 2 shows in a side elevational view the part of the wheel axle suspension of Fig. 1,
Fig. 3 shows the side elevational view of Fig. 2 partly in cross-section,
Fig. 4 shows in a view in perspective from above part of the axle body with the axle pad of the wheel axle suspension of Fig. 1,
Fig. 5 shows in a view in perspective from below a trailing arm of the wheel axle suspension of Fig. 1,
Fig. 6 shows in a view in perspective a part of a wheel axle suspension with another trailing arm with an embodiment of an axle clamping arrangement according to the invention,
Fig. 7 shows in a side elevational view the part of the wheel axle suspension of Fig. 6,
Fig. 8 shows in a view in perspective from below the trailing arm of the wheel axle suspension of Fig. 6,
Fig. 9 shows a cross section of the clamping arrangement of Fig. 6,
Fig. 10 shows a detail of the cross section of Fig. 9 including a tapering protrusion,
Fig. 11 (a) - (c) show cross sections of different shapes of the protrusion of Fig. 10,
Fig. 12 shows a cross section of the protrusion with indication of the inclination of the peripheral surface of the protrusion of Fig .10,
Fig. 13 shows a cross section of a clamping arrangement of a different wheel axle suspension,
Fig. 14 shows in a view in perspective from below an alternative trailing arm of the wheel axle suspension of Fig. 6,
Fig. 15 shows the view of Fig. 3 with indication of the tolerances on dimension of the clamping arrangement, and
Fig. 16 shows in a side elevational view partly in cross section a part of a wheel axle suspension with another embodiment of an axle clamping arrangement according to the invention,
Fig. 17 shows in a view in perspective from above part of the axle body with the axle pad of the wheel axle suspension of Fig. 16,
Fig. 18 shows in a side elevational view partly in cross section a part of a wheel axle suspension with yet another embodiment of an axle clamping arrangement according to the invention,
Fig. 19 shows in a view in perspective from below a trailing arm of the wheel axle suspension of Fig. 18, and
Fig. 20 shows in a view in perspective from above part of the axle body with the axle pad of the wheel axle suspension of Fig. 18.

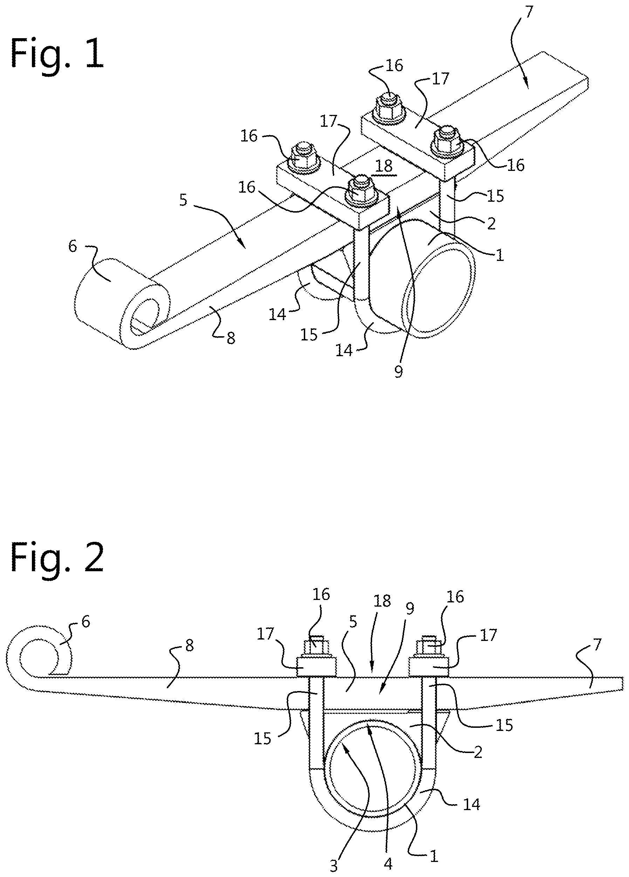

In Fig. 1 and 2 is shown a part of a wheel axle suspension for a utility vehicle such as a trailer, semi-trailer or a truck. Such a wheel axle suspension comprises an axle body 1, in this case a tubular axle body 1 with a circular cross section. In other possible embodiments the axle body may also have another cross section, for example rectangular, which is not shown in the figures. At the ends of the axle body 1, the vehicle wheels and other components can be mounted.

The axle body 1 is suspended from a vehicle chassis by trailing arms 5. In Fig. 1 there is shown only one trailing arm 5, but in an air sprung wheel axle suspension, there are generally two substantially parallel trailing arms 5, one at either lateral side of the vehicle, which are connected to the axle body 1. The trailing arms 5 extend in the longitudinal direction of the vehicle.

At a front end portion of the trailing arm 5 an eyelet 6 is formed by which the trailing arm 5 can be pivotally connected to a carrying bracket of the vehicle chassis (not shown). At a rear end portion 7 of the trailing arm 5 an air spring (not shown) may be mounted, which air spring at an upper end thereof supports the vehicle chassis. This is all common for the skilled person in the field of sprung wheel axle suspensions and will not be further elaborated here. The trailing arm 5 in the shown embodiment is a so called flexible trailing arm, which has a spring portion 8 acting as a leaf spring. The spring portion 8 extends rearwardly from the eyelet 6. In general such flexible trailing arms are made of spring steel by means of a rolling process to give the spring portion 8 a parabolic thickness taper toward the front end. Also flexible trailing arms having a non-parabolic thickness taper and a width taper are possible. Flexible trailing arms can also be made in other ways, such as for example by forging. Also flexible trailing arms made of composite materials are contemplated.

To position the axle body 1 with respect to the trailing arms 5 an axle pad 2 is provided, which is arranged between the axle body 1 and the trailing arm 5 at a clamping region 9 of the latter. The clamping region 9 of the trailing arm integrally adjoins the spring portion 8 at a rear end thereof.

The axle pad 2 is typically a metal cast part, but may also be made in another way. The axle pad 2 has an axle seat 3 formed in it, which provides an engagement surface 4 against which part of the circumference of a longitudinal section of the axle body 1 is clamped. The axle body 1 is thus only supported by the axle pad 2 and there is no direct contact between the axle body 1 and the trailing arm 5.

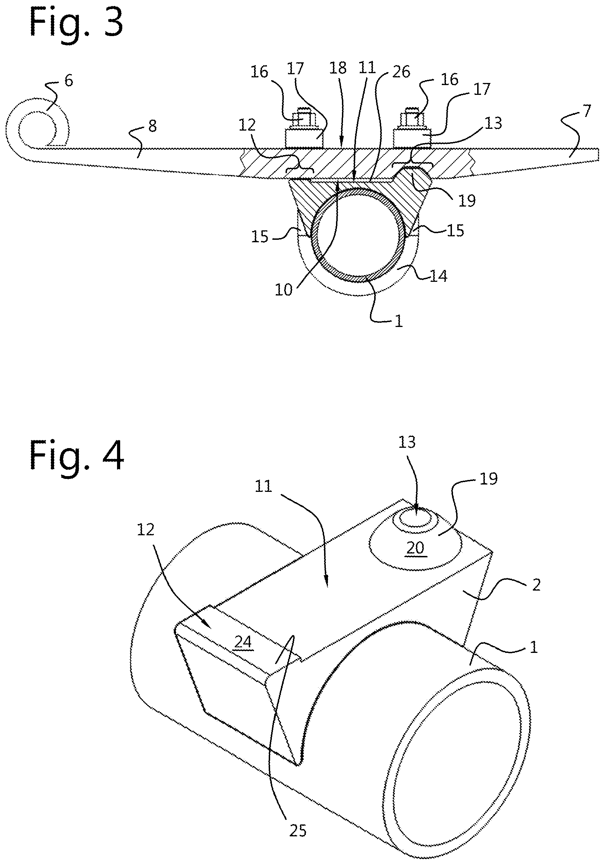

As can be best seen in Figs 3 - 5, the side 11 of the axle pad 2 opposite the axle seat 3, i.e. in the shown example the upper side of the axle pad 2, is facing the trailing arm 5 and is arranged against an axle facing side 10 of the clamping region 9 of the trailing arm 5. The trailing arm 5 extends crosswise with respect to the axle body 1. The axle pad 2 has on this trailing arm facing side 11 a first engagement area 13 and a second engagement area 12 where the axle pad 2 engages the axle facing side 10 of the trailing arm 5.

In the shown example, the tensioning means for clamping the trailing arm 5, the axle pad 2 and the axle body 1 together comprise two U-bolts 14, each located laterally from the trailing arm 5 and extending around the axle body 1. The shanks 15 of the U-bolts 14 have threaded end portions adapted to screw threaded nuts 16 on. On the side 18 of the clamping region of the trailing arm 5, which is facing away from the axle body 1, i.e. in this example the upper side of the clamping region 9, two strap plates 17 extend transversely over the trailing arm 5. The shanks 15 of the respective U-bolts 14 extend upwardly along a lateral side of the trailing arm 5 and extend through holes provided in the respective strap plates 17. When tightening the nuts 16 on the shanks 15, the strap plates 17 function as counter elements and the U-bolts 14 are tensioned and a clamping force results to clamp the axle body 1, the axle pad 2 and the trailing arm 5 together.

As mentioned the axle pad 2 engages the trailing arm 5 at the engagement areas 12 and 13 formed on the axle pad 2.

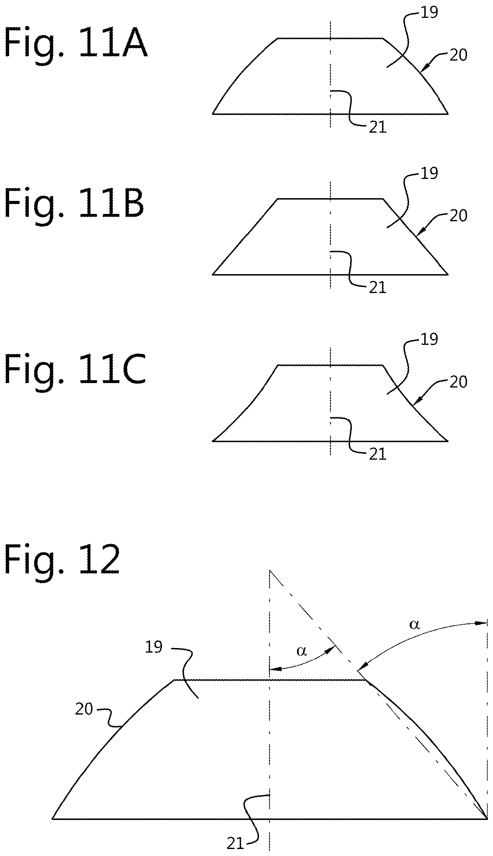

In the embodiment shown the first engagement area 13 of the axle pad 2 includes a tapering protrusion 19 which is, in a preferred embodiment formed as a truncated cone. The truncated cone has a circumferential surface 20 which is tapering, and which may be purely frusto-conical as indicated in Fig. 11(b), or have a positive curvature as shown in Fig. 11 (a) or a negative curvature as shown in Fig. 11 (c).

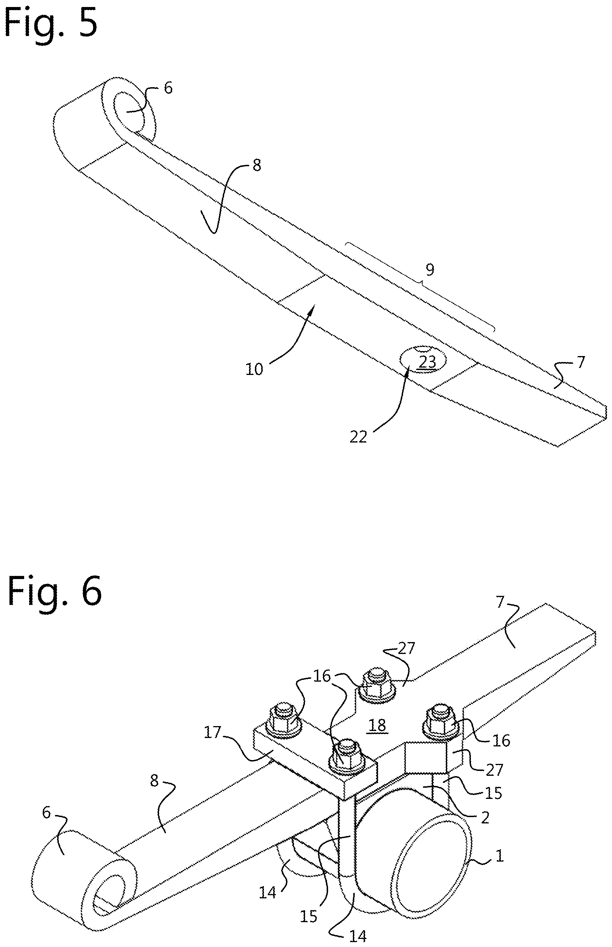

A recess 22, complementary to the shape of the protrusion 19, is formed in the axle facing side 10 in the clamping region 9 of the trailing arm 2, as is illustrated in Fig. 5. In the mounted state the protrusion 19 is received in the recess 22. When the trailing arm 5 and the axle pad 2 are clamped together the tapering surface 20 of the protrusion 19 is supported by a tapering surface 23 of the recess 22. The tapering surfaces 20 and 23 thus constitute support surfaces of the protrusion 19 and the recess 22 respectively in the first engagement area 13. As can be clearly derived from Figs. 2 and 3 the trailing arm is supported at the rear end of the clamping region 9 by the tapering surface of the protrusion 19. There is no engagement between the axle pad 2 and the axle facing side 10 of the trailing arm 5 in the vicinity of the protrusion 19 and the recess 22.

It is preferred that the recess 22 is formed as a depression in the axle facing side 10 of the trailing arm 5. As the trailing arm 10 is subjected during use to dynamic loads it is desirable to use a forming method without machining in which material is cut away. It is important that no sharp edges are created, which could lead to high stresses in the trailing arm material. From a strength point of view it is desired to maintain enough material to maintain the required strength.

The first engagement area 13 is located at a rear end of the trailing arm facing side 11 of the axle pad 2. In the particular embodiment shown in the Figs 1 - 5, the protrusion 19 has a centre axis 21 (cf. Fig. 11), which seen from a lateral side coincides with the centre axis of the rear shanks 15 of the respective U-bolts 14 as can be seen in Figs 2 and 3.

In the shown embodiment the second engagement area 12 is located at a front end of the trailing arm facing side 11 of the axle pad 2. In this second engagement area 12 a ridge 25 is formed which defines a raised engagement surface 24. The engagement surface 24 is generally flat and engages the generally flat axle facing side 10 of the trailing arm 5 at the clamping region 9. The centre of the engagement surface 24 is preferably located at the same level, seen in the longitudinal direction, as the centre axis of the front shanks 15 of the U-bolts 14.

Between the two engagement areas 12, 13 there is a gap 26 between the axle facing side 10 of the trailing arm 5 and the trailing arm facing side 11 of the axle pad 2. Thus, the two engagement areas 12, 13 provide a two point bearing between the axle pad 2 and the clamping region 9 of the trailing arm 5, which may be best seen in Fig. 3.

Figs 6 - 8 illustrate another embodiment of a clamping arrangement according to the invention. The structure of this embodiment is the generally the same as in the embodiment described in the above with reference to Figs 1-5. Therefore, like parts have been indicated with the same reference numerals and for a description of those parts is referred to the above.

The difference between this embodiment of Figs 6 - 8 and the embodiment of Figs 1 - 5 is in the trailing arm. This trailing arm 50 in Figs 6 - 8 has lateral ears 27 formed at the rear end of the clamping region 9. The lateral ears 27 are provided with through holes 28 through which the rear shanks 15 of the U-bolts can pass. In this embodiment the ears 27 thus constitute a counter element for the nuts 16 screwed on the rear shanks 15. At the front end a strap plate 17 is arranged as a counter element, like in the previous embodiment.

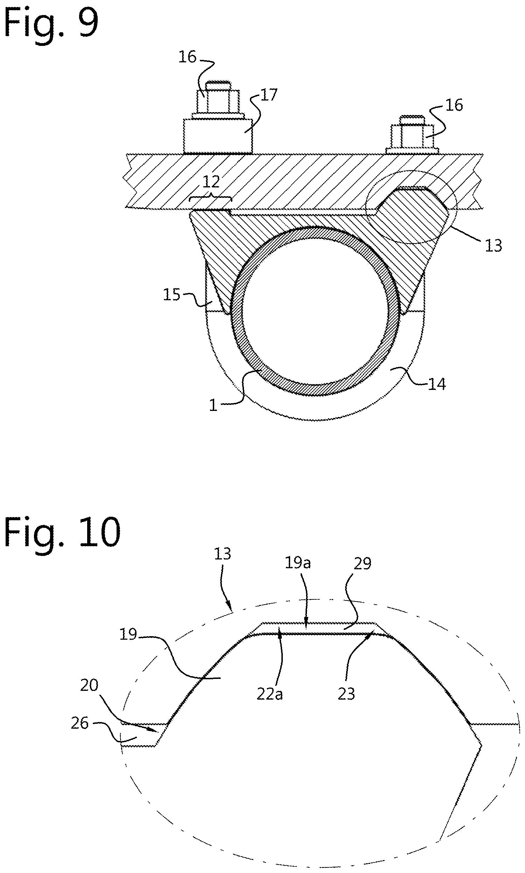

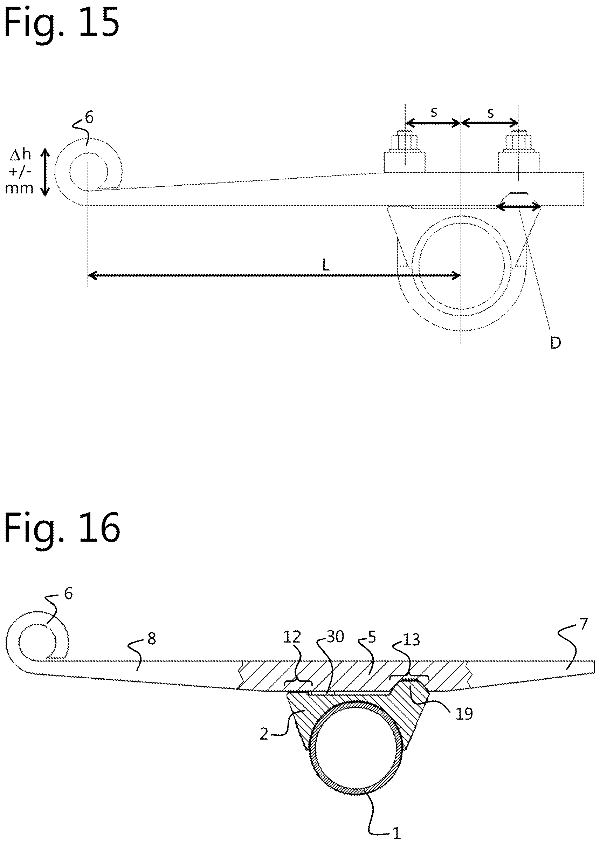

In Fig. 9 a cross section is shown of the clamping arrangement of the embodiment of Fig 6-8. This cross section is essentially the same as the one shown in Fig 3. In Fig. 10 is shown an enlarged view of the first engagement area 13 encircled in Fig. 9. In this enlarged view it is visible that the protrusion 19 has a frusto-conical shape. It can be seen in Fig. 10 that there is a gap 29 between the top surface 19a of the frusto-conical protrusion 19 and the bottom surface 22a of the recess 22. This height of the gap 29 can vary, depending on the actual dimensions of the protrusion 19 and the recess 22, which include manufacturing tolerances in them. For example the base of the protrusion and of the recess may have a diameter D (cf. Fig. 15) with a tolerance of +/- 0,4 mm. The frusto-conical shape of the protrusion 19 and of the recess 22 allow for the compensation of these tolerances. A tolerance of +/- 0,4 mm leads through the distance L between the centre of the axle body 1 and the centre of the eyelet 6 to a height difference Δh of the axis of the eyelet 6 of about +/- 1 mm, which is indicated in Fig. 15.

The tapering shape of the protrusion 19 has a peripheral surface 20 which extends obliquely with respect to the base of said tapering protrusion. In particular the conical surface 20 extends under an angle α with respect to the normal 21 of said base as can be seen in Fig. 12. The angle α between the normal 21 of said base and the peripheral surface 20 is preferably within the range 10° < α < 60°, such that tolerances can be sufficiently compensated.

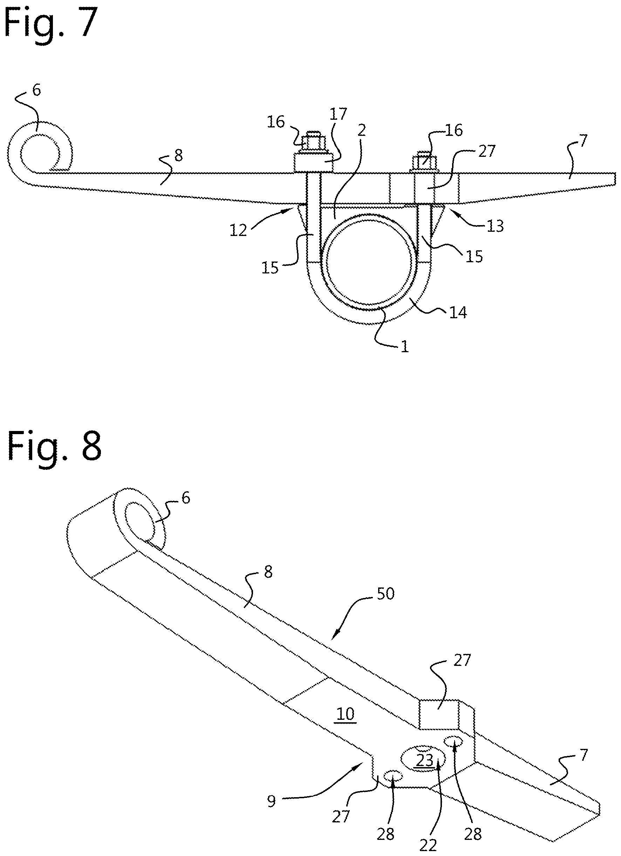

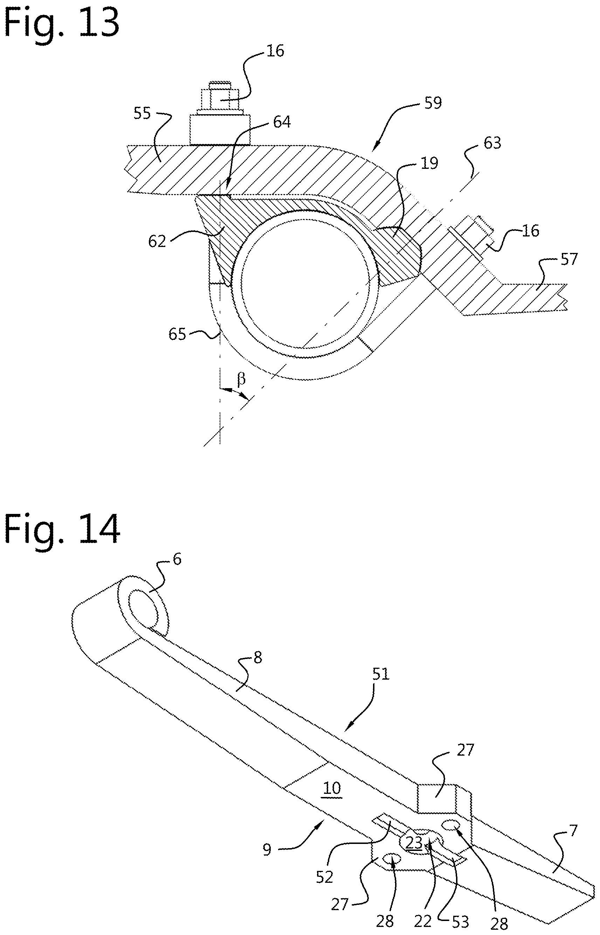

In Fig. 14 a trailing arm 51 is shown which is similar to the trailing arm 50 of Fig. 8. In this trailing arm 51 there are longitudinal slots 52, 53 formed in the axle body facing surface of the trailing arm 51, which slots 52, 53 adjoin the recess 22.

In Fig. 13 is shown a clamping arrangement of a different wheel axle suspension. This wheel axle suspension includes a trailing arm 55 which is curved at its clamping region 59. This trailing arm 55 has at the rear end a mounting portion 57 for an air spring which is on a lower level than the front end of the trailing arm, the axle pad 62 in this embodiment is formed conform to the shape of the trailing arm as a curved plate body. At the rear end a tapering protrusion 19 is formed similar to the protrusions 19 described in the above and for example shown in Fig. 11 (a) - (c).

The protrusion 19 in the first engagement area has a centre axis 63, and the flat support surface 64 of the axle pad 62 in the second engagement area has a normal 65. The centre axis 63 of the protrusion 19 and said normal 65 extend under an angle β with respect to each other, in the example shown in Fig. 13 the angle β = 45°. However, the angle may be in practise within a range 0° ≤ β ≤ 90°. When the angle β = 0°, the mentioned centre axis 63 and the mentioned normal 65 extend parallel to each other, which results in the embodiment of Fig. 7.

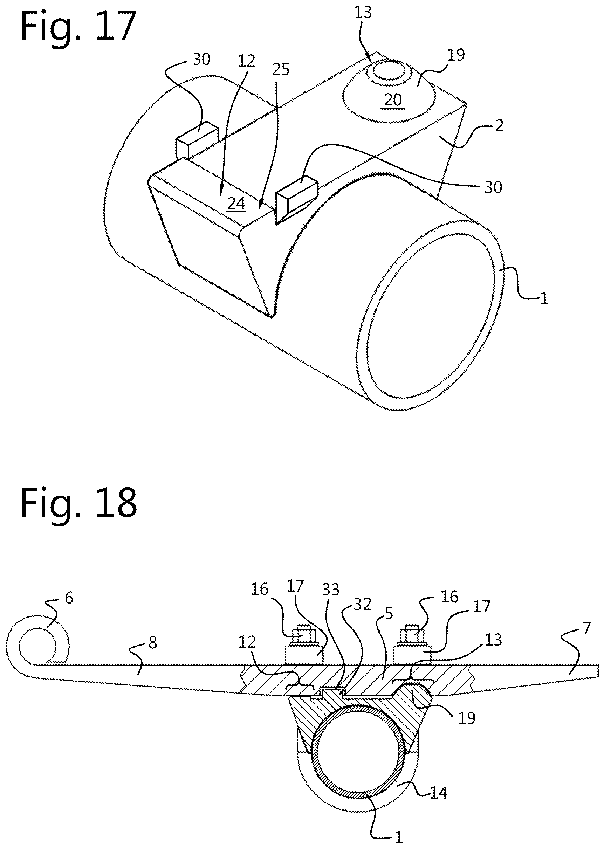

In Figs. 16 and 17 is shown a part of a wheel axle suspension with another embodiment of the axle pad. The difference with the embodiment shown in Figs 1 and 2 is that in this embodiment the axle pad 2 has two lateral lugs 30 which extend from the axle pad upwardly along the respective lateral sides of the trailing arm 5. The lateral lugs 30 provide a lateral interlocking between the trailing arm 5 and the axle pad 2. In the particular embodiment as is shown in Fig. 16 the lateral lugs 30 are formed on the axle pad 2 just rearwardly from the engagement surface 24. However, it is also possible that the lugs are formed more to the front, longitudinally seen at the level of the engagement surface 24.

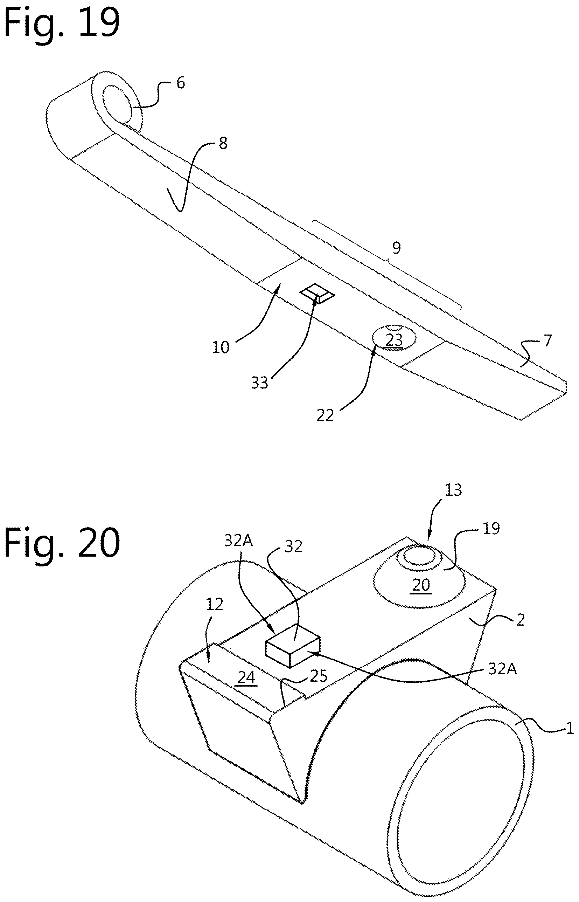

An alternative embodiment is illustrated by Figs 18 - 20. In this embodiment the axle pad 2 has instead of the lateral lugs 30 (cf. Fig. 17) a central lug 32 which protrudes from an upper side of the axle pad 2. The lug 32 is located behind the engagement surface 24. In this case the lug 32 is square, but it may have another shape. The lug 32 is received in a corresponding recess 33 in the axle facing side 10 of the clamping region 9 of the trailing arm 5. The recess 33 can be pressed in the surface of the axle facing side 10. The recess 33 has in the longitudinal direction of the trailing arm 5 a larger length than the lug 32 as can be seen in Fig. 18. Furthermore, the recess 33 has a depth such that there remains a gap between the top of the lug 32 and the bottom of the recess, which can also be recognised in Fig. 18. Only the lateral sides 32A of the lug 32 fit narrowly, i.e. with a narrow gap, in the recess 33, such that the protrusion and recess 33 provide a lateral interlocking between the axle pad 2 and the trailing arm 5.

## Claims

1. Vehicle axle clamping arrangement for a sprung wheel axle of a vehicle, in particular of a utility vehicle such as a truck, trailer or semi-trailer, the axle clamping arrangement comprising:
- an axle body (1) extending in a transverse direction of the vehicle;
- a trailing arm (5, 55) crossing the axle body (1) on an upper or lower side thereof;
- an axle pad (2, 62) arranged between the trailing arm (5, 55) and the axle body (1), the axle pad (2, 62) having an axle seat (3) formed in it for receiving a longitudinal section of the axle body (1);
- tensioning means (14, 16, 17) for clamping the trailing arm (5), the axle pad (2) and the axle body (1) together;
wherein the axle body (1) is clamped only against an engagement surface (4) provided by the axle seat (3),
**characterized in that** the axle clamping arrangement provides a two-point bearing between the axle pad (2, 62) and a clamping region (9, 59) of the trailing arm (5, 55), said two-point bearing being provided by a first engagement area (13) and a second engagement area (12) which are spaced apart from each other seen in the longitudinal direction of the trailing arm (5, 55), and in which, respectively, a support surface (20, 24, 64) of the axle pad (2, 62) and a support surface (10, 23) of the trailing arm (5, 55) are clamped in engagement with each other,
wherein in the first engagement area (13) a tapering protrusion (19) is formed on one of the axle pad (2, 62) and the trailing arm (5, 55) and a complementary tapering recess (22) is formed on the other one of the axle pad (2, 62) and the trailing arm (5, 55) to receive said protrusion (19), said tapering surfaces of the protrusion (19) and of the recess (22) constituting the support surfaces in the first engagement area (13) where the axle pad (2, 62) and the trailing arm (5, 55) are clamped in engagement with each other, and
wherein in the second engagement area (12) a generally flat support surface (24, 64) is formed on the axle pad (2, 62) and a generally flat support surface is formed (10) on the trailing arm (5, 55), said flat support surfaces (24, 10, 64) constituting the support surfaces in the second engagement area (12) where the axle pad (2, 62) and the trailing arm (5, 55) are clamped in engagement with each other.

2. Axle clamping arrangement according to claim 1, wherein the protrusion (19) has a base which has a width or a diameter which is at least 30% of the width of the trailing arm (5, 55) at the location of the clamping region (9, 59).

3. Axle clamping arrangement according to claim 1, wherein the protrusion (19) has a base which has a width or a diameter which is 50% or more of the width of the trailing arm (5, 55) at the location of the clamping region (9, 59).

4. Axle clamping arrangement according to any of the claims 1-3, wherein the tapering shape of the protrusion (19) has a tapering surface (20) which extends obliquely with respect to a base of said tapering protrusion (19), in particular under an angle α with respect to the normal (21) of said base, wherein the angle α between the normal (21) of said base and the peripheral surface 10° < α < 60°.

5. Axle clamping arrangement according to any of the claims 1-4, wherein the protrusion (19) in the first engagement area has a centre axis (63), and the flat support surface (64) of the axle pad (2) in the second engagement area (12) has a normal (65), wherein said centre axis (63) and said normal (65) extend under an angle β with respect to each other, wherein -45° ≤ β ≤ 90°, preferably 0° ≤ β ≤ 90°.

6. Axle clamping arrangement according to any of the claims 1-5, wherein the protrusion (19) has a round and tapering shape, and the recess (22) has a complementary round and tapering shape.

7. Axle clamping arrangement according to claim 6, wherein the round and tapering shape is a frusto-conical shape or a spherical segment (spherical frustum).

8. Axle clamping arrangement according to claim 7, wherein:
- the frusto-conical shape has a negative curvature; or
- the frusto-conical shape has a positive curvature.

9. Axle clamping arrangement according to claim 1-5, wherein the protrusion has a polygonal and tapering shape, and the recess has a complementary polygonal and tapering shape.

10. Axle clamping arrangement according to claim 9, wherein the polygonal and tapering shape is a truncated square pyramid shape.

11. Axle clamping arrangement according to any of the claims 1-10, wherein the protrusion (19) is formed on the axle pad (2, 62) and the recess (22) is formed into the trailing arm (5, 55).

12. Axle clamping arrangement according to any of the claims 1-11, wherein the recess (22) is formed as a depression.

13. Axle clamping arrangement according to any of the claims 1-12, wherein the tensioning means comprise tensioning shanks (15), wherein at a front end region of the axle pad (2, 62) at least one front shank (15) of said tensioning shanks (15) and at a rear end region of the axle pad (2, 62) at least one rear shank (15) of said tensioning shanks (15) is located, wherein, preferably, the tensioning shanks (15) are threaded shanks, and the tensioning means furthermore comprise nuts (16) adapted to cooperate with the threaded shanks (15).

14. Axle clamping arrangement according to claim 13, wherein, seen in the longitudinal direction of the trailing arm (5, 55), the first engagement area (13) is located substantially at the rear end region of the axle pad (2, 62) and the second engagement area (12) is located substantially at the front end region of the axle pad (2, 62), wherein, preferably, the protrusion (19) in the first engagement area (13) has a centre axis (21), which is, seen in the longitudinal direction of the trailing arm (5), at the same level as the centre axis of the at least one rear shank (15).

15. Sprung wheel axle suspension comprising an axle clamping arrangement according to any one of the preceding claims.

## Patentansprüche

1. Fahrzeug-Achsenklemmanordnung für eine gefederte Radachse eines Fahrzeugs, insbesondere eines Nutzfahrzeugs, wie beispielsweise eines Lastkraftwagens, Anhängers oder Sattelaufliegers, wobei die Achsenklemmanordnung Folgendes umfasst:
- einen Achskörper (1), der sich in einer Querrichtung des Fahrzeugs erstreckt;
- einen Längslenker (5, 55), der den Achskörper (1) auf einer oberen oder unteren Seite kreuzt;
- eine Achsplatte (2, 62), die zwischen dem Längslenker (5, 55) und dem Achskörper (1) angeordnet ist, wobei die Achsplatte (2, 62) einen Achsensitz (3) aufweist, der zum Aufnehmen eines Längsabschnitts des Achskörpers (1) in der Achsplatte (2, 62) geformt ist;
- Spannmittel (14, 16, 17) zum Zusammenklemmen des Längslenkers (5), der Achsplatte (2) und des Achskörpers (1);
wobei der Achskörper (1) nur gegen eine Eingriffsfläche (4) geklemmt ist, die durch den Achsensitz (3) bereitgestellt ist,
**dadurch gekennzeichnet, dass** die Achsenklemmanordnung ein Zweipunkt-Lager zwischen der Achsplatte (2, 62) und einem Klemmbereich (9, 59) des Längslenkers (5, 55) bereitstellt, wobei das Zweipunkt-Lager durch einen ersten Eingriffsbereich (13) und einen zweiten Eingriffsbereich (12) bereitgestellt ist, die, gesehen in der Längsrichtung des Längslenkers (5, 55), voneinander beabstandet sind, und in denen jeweils eine Stützfläche (20, 24, 64) der Achsplatte (2, 62) beziehungsweise eine Stützfläche (10, 23) des Längslenkers (5, 55) in Eingriff miteinander geklemmt sind,
wobei in dem ersten Eingriffsbereich (13) ein sich verjüngender Vorsprung (19) an einem von der Achsplatte (2, 62) und dem Längslenker (5, 55) geformt ist und eine komplementäre sich verjüngende Aussparung (22) in dem anderen von der Achsplatte (2, 62) und dem Längslenker (5, 55) geformt ist, um den Vorsprung (19) aufzunehmen, wobei die sich verjüngenden Flächen des Vorsprungs (19) und der Aussparung (22) die Stützflächen in dem ersten Eingriffsbereich (13) darstellen, wo die Achsplatte (2, 62) und der Längslenker (5, 55) in Eingriff miteinander geklemmt sind, und
wobei in dem zweiten Eingriffsbereich (12) eine im Allgemeinen flache Stützfläche (24, 64) an der Achsplatte (2, 62) geformt ist und eine im Allgemeinen flache Stützfläche (10) an dem Längslenker (5, 55) geformt ist, wobei die flachen Stützflächen (24, 10, 64) die Stützflächen in dem zweiten Eingriffsbereich (12) darstellen, wo die Achsplatte (2, 62) und der Längslenker (5, 55) in Eingriff miteinander geklemmt sind.

2. Achsenklemmanordnung nach Anspruch 1, wobei der Vorsprung (19) eine Basis aufweist, die eine Breite oder einen Durchmesser aufweist, die/der wenigstens 30 % der Breite des Längslenkers (5, 55) an der Position des Klemmbereichs (9, 59) beträgt.

3. Achsenklemmanordnung nach Anspruch 1, wobei der Vorsprung (19) eine Basis aufweist, die eine Breite oder einen Durchmesser aufweist, die/der 50 % oder mehr der Breite des Längslenkers (5, 55) an der Position des Klemmbereichs (9, 59) beträgt.

4. Achsenklemmanordnung nach einem der Ansprüche 1 bis 3, wobei die sich verjüngende Form des Vorsprungs (19) eine sich verjüngende Fläche (20) aufweist, die sich schräg in Bezug auf eine Basis des sich verjüngenden Vorsprungs (19) erstreckt, insbesondere unter einem Winkel α in Bezug zu der Senkrechten (21) der Basis, wobei der Winkel α zwischen der Senkrechten (21) der Basis und der Umfangsfläche 10° < α < 60°.

5. Achsenklemmanordnung nach einem der Ansprüche 1 bis 4, wobei der Vorsprung (19) in dem ersten Eingriffsbereich eine Mittelachse (63) aufweist und die flache Stützfläche (64) der Achsplatte (2) in dem zweiten Eingriffsbereich (12) eine Senkrechte (65) aufweist, wobei sich die Mittelachse (63) und die Senkrechte (65) unter einem Winkel β in Bezug aufeinander erstrecken, wobei -45° ≤ β ≤ 90°, vorzugsweise 0° ≤ β ≤ 90°.

6. Achsenklemmanordnung nach einem der Ansprüche 1 bis 5, wobei der Vorsprung (19) eine runde und sich verjüngende Form aufweist und die Aussparung (22) eine komplementäre runde und sich verjüngende Form aufweist.

7. Achsenklemmanordnung nach Anspruch 6, wobei die runde und sich verjüngende Form eine kegelstumpfförmige Form oder ein Kugelabschnitt (Kugelstumpf) ist.

8. Achsenklemmanordnung nach Anspruch 7, wobei:
- die kegelstumpfförmige Form eine negative Krümmung aufweist; oder
- die kegelstumpfförmige Form eine positive Krümmung aufweist.

9. Achsenklemmanordnung nach einem der Ansprüche 1 bis 5, wobei der Vorsprung eine vieleckige und sich verjüngende Form aufweist und die Aussparung eine komplementäre vieleckige und sich verjüngende Form aufweist.

10. Achsenklemmanordnung nach Anspruch 9, wobei die vieleckige und sich verjüngende Form eine abgestumpfte quadratische Pyramidenform ist.

11. Achsenklemmanordnung nach einem der Ansprüche 1 bis 10, wobei der Vorsprung (19) an der Achsplatte (2, 62) geformt ist und die Aussparung (22) in dem Längslenker (5, 55) geformt ist.

12. Achsenklemmanordnung nach einem der Ansprüche 1 bis 11, wobei die Aussparung (22) als eine Vertiefung geformt ist.

13. Achsenklemmanordnung nach einem der Ansprüche 1 bis 12, wobei die Spannmittel Spannschäfte (15) umfassen, wobei an einem vorderen Endbereich der Achsplatte (2, 62) wenigstens ein vorderer Schaft (15) der Spannschäfte (15) und an einem hinteren Endbereich der Achsplatte (2, 62) wenigstens ein hinterer Schaft (15) der Spannschäfte (15) angeordnet ist, wobei, vorzugsweise, die Spannschäfte (15) Gewindeschäfte sind und die Spannmittel darüber hinaus Muttern (16) umfassen, die angepasst sind, um mit den Gewindeschäften (15) zusammenzuwirken.

14. Achsenklemmanordnung nach Anspruch 13, wobei, gesehen in der Längsrichtung des Längslenkers (5, 55), der erste Eingriffsbereich (13) im Wesentlichen an dem hinteren Endbereich der Achsplatte (2, 62) angeordnet ist und der zweite Eingriffsbereich (12) im Wesentlichen an dem vorderen Endbereich der Achsplatte (2, 62) angeordnet ist, wobei, vorzugsweise, der Vorsprung (19) in dem ersten Eingriffsbereich (13) eine Mittelachse (21) aufweist, die sich, gesehen in der Längsrichtung des Längslenkers (5), auf der gleichen Ebene befindet wie die Mittelachse des wenigstens einen hinteren Schafts (15) .

15. Gefederte Radachsenaufhängung, die eine Achsenklemmanordnung nach einem der vorhergehenden Ansprüche umfasst.

## Revendications

1. Dispositif de serrage d'essieu de véhicule pour un essieu de roue à ressorts d'un véhicule, en particulier d'un véhicule utilitaire tel qu'un camion, une remorque ou un semi-remorque, le dispositif de serrage d'essieu comprenant :
- un corps d'essieu (1) s'étendant dans une direction transversale du véhicule ;
- un bras oscillant (5, 55) traversant le corps d'essieu (1) sur un côté supérieur ou inférieur de celui-ci ;
- un tampon d'essieu (2, 62) disposé entre le bras oscillant (5, 55) et le corps d'essieu (1), le tampon d'essieu (2, 62) ayant un siège d'essieu (3) formé dans celui-ci pour recevoir une section longitudinale du corps d'essieu (1) ;
- des moyens de tension (14, 16, 17) pour serrer ensemble le bras oscillant (5), le tampon d'essieu (2) et le corps d'essieu (1) ;
dans lequel le corps d'essieu (1) est serré uniquement contre une surface d'engagement (4) fournie par le siège d'essieu (3),
**caractérisé en ce que** le dispositif de serrage d'essieu fournit un palier à deux points entre le tampon d'essieu (2, 62) et une région de serrage (9, 59) du bras oscillant (5, 55), ledit palier à deux points étant fourni par une première zone d'engagement (13) et une seconde zone d'engagement (12) qui sont espacées l'une de l'autre, vues dans la direction longitudinale du bras oscillant (5, 55), et sur lesquelles, respectivement, une surface de support (20, 24, 64) du tampon d'essieu (2, 62) et une surface de support (10, 23) du bras oscillant (5, 55) sont serrées en engagement l'une avec l'autre,
dans lequel, dans la première zone d'engagement (13), une saillie (19) conique est formée sur l'un du tampon d'essieu (2, 62) et du bras oscillant (5, 55) et un évidement (22) conique complémentaire est formé sur l'autre du tampon d'essieu (2, 62) et du bras oscillant (5, 55) pour recevoir ladite saillie (19), lesdites surfaces coniques de la saillie (19) et de l'évidement (22) constituant les surfaces de support dans la première zone d'engagement (13) où le tampon d'essieu (2, 62) et le bras oscillant (5, 55) sont serrés en engagement l'un avec l'autre, et
dans lequel, dans la seconde zone d'engagement (12), une surface de support généralement plate (24, 64) est formée sur le tampon d'essieu (2, 62) et une surface de support généralement plate (10) est formée sur le bras oscillant (5, 55), lesdites surfaces de support plates (24, 10, 64) constituant les surfaces de support dans la seconde zone d'engagement (12) où le tampon d'essieu (2, 62) et le bras oscillant (5, 55) sont serrés en engagement l'un avec l'autre.

2. Dispositif de serrage d'essieu selon la revendication 1, dans lequel la saillie (19) a une base qui a une largeur ou un diamètre qui est au moins 30% de la largeur du bras oscillant (5, 55) à l'emplacement de la région de serrage (9, 59) .

3. Dispositif de serrage d'essieu selon la revendication 1, dans lequel la saillie (19) a une base qui a une largeur ou un diamètre qui est de 50% ou plus de la largeur du bras oscillant (5, 55) à l'emplacement de la région de serrage (9, 59) .

4. Dispositif de serrage d'essieu selon l'une quelconque des revendications 1 à 3, dans lequel la forme conique de la saillie (19) présente une surface conique (20) qui s'étend obliquement par rapport à une base de ladite saillie (19) conique, en particulier sous un angle α par rapport à la normale (21) de ladite base, dans lequel l'angle α entre la normale (21) de ladite base et la surface périphérique 10° < α < 60°.

5. Dispositif de serrage d'essieu selon l'une quelconque des revendications 1 à 4, dans lequel la saillie (19) dans la première zone d'engagement a un axe central (63), et la surface de support plate (64) du tampon d'essieu (2) dans la seconde zone d'engagement (12) a une normale (65), dans lequel ledit axe central (63) et ladite normale (65) s'étendent sous un angle β l'un par rapport à l'autre, dans lequel -45° ≤ β ≤ 90°, de préférence 0° ≤ β ≤ 90°.

6. Dispositif de serrage d'essieu selon l'une quelconque des revendications 1 à 5, dans lequel la saillie (19) présente une forme ronde et conique, et l'évidement (22) présente une forme ronde et conique complémentaire.

7. Dispositif de serrage d'essieu selon la revendication 6, dans lequel la forme ronde et conique est une forme tronconique ou un segment sphérique (tronc de sphère).

8. Dispositif de serrage d'essieu selon la revendication 7, dans lequel la forme tronconique présente une courbure négative ; ou la forme tronconique présente une courbure positive.

9. Dispositif de serrage d'essieu selon la revendication 1 à 5, dans lequel la saillie a une forme polygonale et conique, et l'évidement a une forme polygonale et conique complémentaire.

10. Dispositif de serrage d'essieu selon la revendication 9, dans lequel la forme polygonale et conique est une forme de pyramide carrée tronquée.

11. Dispositif de serrage d'essieu selon l'une quelconque des revendications 1 à 10, dans lequel la saillie (19) est formée sur le tampon d'essieu (2, 62) et l'évidement (22) est formé dans le bras oscillant (5, 55).

12. Dispositif de serrage d'essieu selon l'une quelconque des revendications 1 à 11, dans lequel l'évidement (22) est formé comme une dépression.

13. Dispositif de serrage d'essieu selon l'une quelconque des revendications 1 à 12, dans lequel les moyens de tension comprennent des tiges de tension (15), dans lequel au moins une tige avant (15) desdites tiges de tension (15) est située au niveau d'une région d'extrémité avant du tampon d'essieu (2, 62) et au moins une tige arrière (15) desdites tiges de tension (15) est située au niveau d'une région d'extrémité arrière du tampon d'essieu (2, 62),
dans lequel de préférence les tiges de tension (15) sont des tiges filetées, et les moyens de tension comprennent en outre des écrous (16) adaptés pour coopérer avec les tiges filetées (15) .

14. Dispositif de serrage d'essieu selon la revendication 13, dans lequel, vu dans la direction longitudinale du bras oscillant (5, 55), la première zone d'engagement (13) est située sensiblement au niveau de la région d'extrémité arrière du tampon d'essieu (2, 62) et la seconde zone d'engagement (12) est située sensiblement au niveau de la région d'extrémité avant du tampon d'essieu (2, 62), dans lequel, de préférence, la saillie (19) dans la première zone d'engagement (13) a un axe central (21) qui est, vu dans la direction longitudinale du bras oscillant (5), au même niveau que l'axe central de la au moins une tige arrière (15).

15. Suspension d'essieu de roue à ressorts comprenant un dispositif de serrage d'essieu selon l'une quelconque des revendications précédentes.
